# EUROPÄISCHE PATENTANMELDUNG

(11) **EP 0 896 919 A2**
(43) Veröffentlichungstag der Anmeldung: **17.02.1999**
(21) Anmeldenummer: 98113884.5
(22) Anmeldetag: 24.07.1998
(51) Int. Cl.: B62D 25/14

(54) **Querträger zur Halterung der Lenksäule eines Kraftfahrzeuges, insbesondere eines Personenkraftwagens**

(30) Priorität: 13.08.1997 DE 19735089
(71) Anmelder: Erbslöh Aktiengesellschaft, 42553 Velbert (DE)
(72) Erfinder: Anderseck, Ralf, Dipl.-Ing., 42477 Radevormwald (DE); Blomberg, Harald, 42349 Wuppertal (DE)
(74) Vertreter: Mentzel, Norbert, Dipl.-Phys.

(57) **Zusammenfassung**

Der Querträger (10) ist quer zur Fahrzeuglängsrichtung zwischen den beiden A-Säulen der Fahrzeugkarosserie angeordnet und an die A-Säulen angeschlossen. Der Querträger (10) ist als Hohlprofil (11), vorzugsweise als stranggepresstes Hohlprofil aus dem Werkstoff Aluminium und seinen Legierungen gestaltet.

Um den Beanspruchungen aus Belastungen durch die Lagerung der Lenksäule bei ausreichender Steifigkeit zu genügen, ist mit dem Querträger (10) im Bereich der Lenksäule zu deren Halterung ein sich bereichsweise in Längsrichtung des Querträgers erstreckendes Verstärkungsprofil (12) fest verbunden.

## Beschreibung

Die Erfindung betrifft einen Querträger zur Halterung der Lenksäule eines Kraftfahrzeuges, insbesondere eines Personenkraftwagens, der quer zur Fahrzeuglängsrichtung zwischen den beiden A-Säulen der Fahrzeugkarosserie angeordnet und an die A-Säulen angeschlossen ist, wobei der Querträger als Hohlprofil vorzugsweise als stranggepresstes Hohlprofil aus dem Werkstoff Aluminium und seinen Legierungen gestaltet ist.

Es war lange Zeit üblich, die Lenksäule an einem die beiden A-Säulen der Fahrzeugkarosserie verbindenden Querträger zum einen zu lagern und andererseits eine weitere Lagerstelle im Bereich der Vorderachse vorzusehen. Mit der Schaffung einer im Crashfall Energie absorbierenden Knautschzone erfolgte die Lagerung der Lenksäule ausschließlich noch an dem die A-Säulen verbindenden Querträger, während im Achsbereich die Lenksäule über Kardangelenke mit dem Lenkgetriebe verbunden ist. Da nicht ausgeschlossen werden kann, dass sich der Fahrzeugführer während des Ein- und Aussteigens oder bei der Sitzverstellung am Lenkrad abstützt und die daraus resultierenden Kräfte ausschließlich in den Querträger eingeleitet werden müssen, sind die daran zu stellenden Stabilitätsanforderungen relativ hoch. Infolgedessen muss der Querträger neben der Funktion der Schwingungsdämpfung insbesondere auch hohe Biegebeanspruchungen aufnehmen können. Zur Schaffung eines die Forderungen nach hoher Steifigkeit und mechanischer Stabilität erfüllenden Querträgers ist es durch das deutsche Gebrauchsmuster 296 15 364 U1 bekannt geworden, den Querträger aus einem Hauptteil und einem Hilfsteil zu gestalten, wobei diese Bauteile Strukturen aufweisen, die sich zu dem Querträger ergänzen. Zu diesem Zweck weisen die Bauteile winkelförmigen bzw. U-förmigen Querschnitt auf, wobei die Querschnitte jedoch über die gesamte Länge des Querträgers gleichbleibend sind. Somit sind auch diejenigen Stellen, an denen Maximalbeanspruchungen nicht auftreten gleich stark wir die stärker belasteten Abschnitte gestaltet. Dies führt zu unnötig hohem Gewicht des gesamten Querträgers.

Es ist allerdings auch bereits bekannt, den Querträger als Kastenprofil aus beispielsweise zwei gepressten Stahlblechschalen auszubilden, bei dem der die Lenksäule abstützende Bereich einen größeren Querschnitt als auf der Beifahrerseite aufweist. Abgesehen davon, dass aufgrund des höheren spezifischen Gewichtes von Stahl ein Querträger aus Stahlblech schwerer ist als solche aus Leichtmetall, ist für die Fertigung solcher Pressteile ein diese verteuernder Maschinenpark erforderlich zumal nicht unbeträchtliche Werkzeugkosten anfallen, mit denen die Querträger belastet sind. Außerdem ist die Anbringung von Zusatzbauteilen an einem solchen Querträger schwierig.

Aus der DE 44 10 082 C2 ist ein Querträger der eingangs genannten Art bekannt geworden, bei dem die vorgenannten Nachteile dadurch vermieden werden, dass die Lagerung der Lenksäule am Querträger stabilisiert wird, indem der Querträger in seinem mittleren Bereich über eine Stütze an der Bodengruppe des Kraftfahrzeuges abgestützt ist und überdies im Bereich der Lenksäulenlagerung der Querträger über einen nach oben abstehenden Halter am unteren Windschutzscheibenträger abgestützt werden kann, wobei diese Bauteile sämtlich aus Aluminiumwerkstoff bestehen. Obschon bei dieser Lösung ein in seinem Querschnitt gleichförmiger Querträger verwendet werden kann, so wird doch aufgrund der als Zusatzbauteile fungierenden Stütze und Halter keine Gewichtsreduzierung erzielt und überdies der Montageaufwand für den Anschluss der Zusatzbauteile erhöht. Außerdem ist der Anschluss des Querträgers an die A-Säulen infolge einfach umgebogener Wandteile des Querträgers instabil.

Aufgabe der Erfindung ist es, unter Meidung vorgenannter Nachteile einen Querträger aus Aluminium und seinen Legierungen zu schaffen, der aufgrund seiner Gestaltung bei hoher Steifigkeit leichtgewichtig, kostengünstig herstellbar und montierbar ist. Diese Aufgabe ist mit den im Kennzeichen des Patentanspruches 1 genannten Merkmalen gelöst. Infolge der im Lenksäulenhalterungsbereich gebildeten Verstärkung des Querträgers weist dieser an der Stelle seiner größten Belastung ein genügend großes Widerstandsmoment für die Abstützung der Lenksäule auf und erfüllt auch die Anforderungen an seine Steifigkeit. Die Ausbildung des Querträgers als Hohlprofil und die Gestaltung der Verstärkung als Profilstab erlauben deren Herstellung im Strangpressverfahren, so dass die Verwendung von Leichtmetall auch dann zu verwirklichen ist, wenn der Querträger ein über seine Länge verschiedenes Widerstandsmoment aufweisen soll. Dabei weist das Verstärkungsprofil vorteilhaft einen U-förmigen Querschnitt auf, dessen Seitenwangen mit vom Querträger nach unten abragenden Stegen fest verbunden sind. Somit kann der Querträger letztendlich gleiche Breite, jedoch unterschiedliche Höhe aufweisen, was für den die Lenksäule abstützenden Bereich bedeutungsvoll ist. Zwecks übergangsloser Breitenverhältnisse im Verstärkungsbereich des Querträgers sind die an der Unterseite des Querträgers abragenden Stege vorteilhaft um die Wandstärke der Seitenwangen des Verstärkungsprofiles gegenüber der jeweiligen Seitenwand des Querträgers nach innen versetzt angeordnet und von den Seitenwangen des Verstärkungsprofiles übergriffen. Nach Befestigung des Verstärkungsprofils am Querträger bilden die Unterkanten des Verstärkungsprofils auf der Lenkradseite und die Unterkanten des Querträgers auf der Beifahrerseite gemeinsame Unterkanten ohne stufenweise Übergänge. Dazu wird das Verstärkungsprofil entweder an der Oberseite oder an der Unterseite mit einem querschnittsverringernden Schnitt versehen.

Obschon als Verbindung des Verstärkungsprofiles mit dem Querträger Verrasten oder Vernieten möglich erscheint, ist es aus Festigkeitsgründen vorteilhaft, wenn die feste Verbindung zwischen Querträger und Verstärkungsprofil durch Verschweißen, vorzugsweise durch Laserschweißen von Schweißnähten zwischen den Stegen des Querträgers und den Seitenwangen des Verstärkungsprofiles erfolgt. Es versteht sich jedoch, dass sich auch andere Schweißverfahren für die Verbindung von Querträger und Verstärkungsprofil bei dem Werkstoff Aluminium eignen, wie beispielsweise das WIG-(Wolfram-Elektrode-Inertgas) oder das MIG-(Metall-Elektrode-Inertgas) Schweißverfahren, als Schutzgasschweißung. Für die beiden letztgenannten Schweißverfahren ließe sich der Querträger vorteilhaft derart ausbilden, dass im oberen Bereich der Seitenwangen des Verstärkungsprofiles eine Reihe von die Stege des Querträgers überdeckenden Durchbrüchen zur Lochschweißung angeordnet sind. Dabei lassen sich die Durchbrüche am oberen Rand der Seitenwangen des Verstärkungsprofiles als sich in Längsrichtung des Querträgers erstreckende, abstandsweise in einer Reihe hintereinander angeordnete Langlöcher ausbilden.

Zur Schaffung genügender Befestigungsmöglichkeiten für Anbauteile, Kabel u.dgl. weist außer dem Querträger auch das Verstärkungsprofil unterseitig über seinen U-Querschnitt hinausragende Lamellen auf, die Verlängerungen der Seitenwangen des Verstärkungsprofiles bilden und dessen Querschnitt zu einem H-Profil ergänzen. Statt zweier die Seitenwangen verlängernder Lamellen ist es auch möglich, das einen U-Querschnitt aufweisende Verstärkungsprofil unterseitig mit einer vom Verbindungssteg der Seitenwangen abragenden Lamelle zu versehen.

Um ein Lenksäulenlager und weitere beliebige Anbauteile am Querträger befestigen zu können, sind sowohl am Querträger als auch am Verstärkungsprofil in Fahrzeuglängsachse abragende Einpressschrauben fixiert. Darüber hinaus mag der Querträger und gegebenenfalls auch das Verstärkungsprofil mit Aufnahmebohrungen zum Anbringen von Einnietmuttern, Kabelclips u.dgl. versehen sein. Die Verwendung von Strangpressprofilen ist insofern vorteilhaft, als dass die Profile bei Bedarf unterschiedliche Wandstärken der einzelnen Seitenwände bzw. Wandabschnitte aufweisen können.

Die Erfindung ist in Ausführungsbeispielen auf der Zeichnung dargestellt und wird nachfolgend näher erläutert. Es zeigen:
- Fig. 1: den aus einem stanggepressten Hohlprofil und einem Verstärkungsprofil zusammengefügten Querträger in einer perspektivischen Ansicht,
- Fig. 2: den Querträger im Querschnitt nach der Linie II - II von Fig. 1,
- Fig. 3: ein weiteres Ausführungsbeispiel eines aus Hohlprofil und Verstärkungsprofil gebildeten Querträgers,
- Fig. 4: den aus Fig. 3 ersichtlichen Querträger im Querschnitt nach der Linie IV - IV von Fig. 3.

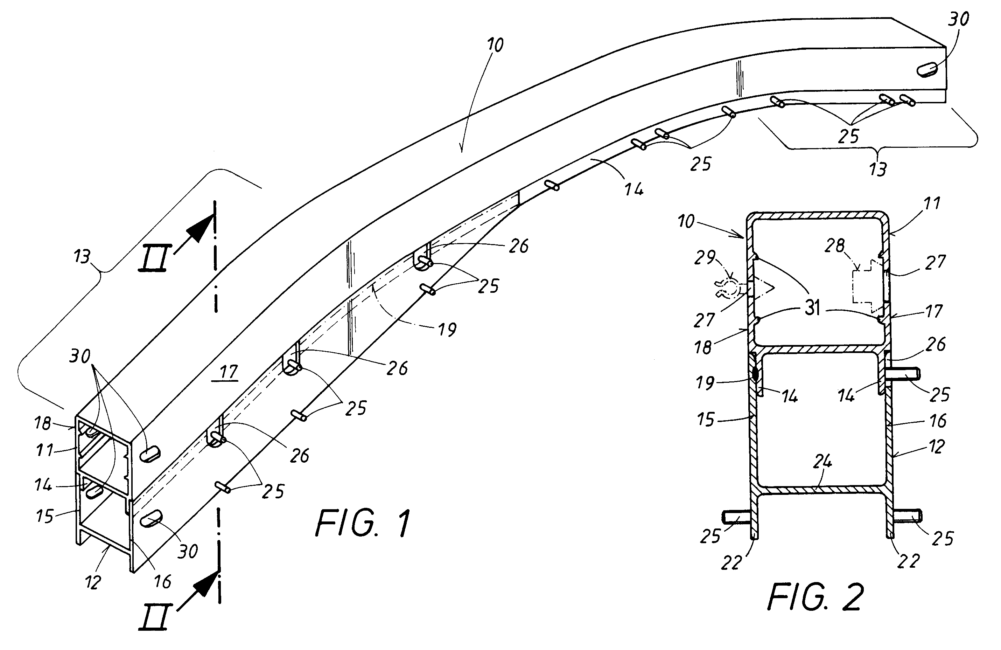

Der aus einem stranggepressten Hohlprofil 11 aus Leichtmetall, wie Aluminium gebildete Querträger 10 ist auf der die Lenksäule aufweisenden Fahrzeugseite mit einem Verstärkungsprofil 12 fest verbunden. Wie aus Fig. 1 entnommen werden kann, ist das Verstärkungsprofil 12 auf der von der Kraftfahrzeuginnenseite aus gesehen linken Seite an das Hohlprofil 11 zur Bildung des Querträgers 10 angeschlossen, weil in vielen Ländern auch auf der linken Innenseite des Fahrzeuges das Lenkrad angeordnet ist. Es versteht sich natürlich, dass bei Anordnung des Lenkrades auf der rechten Innenseite des Fahrzeuges das Verstärkungsprofil 12 auch auf der rechten Seite des Querträgers 10 angeschlossen ist, wenn man von der Innenseite des Fahrzeuges her auf den Querträger 10 schaut. Wie außerdem der Fig. 1 entnommen werden kann, ist bei dem vorliegenden Ausführungsbeispiel der Querträger 10 entsprechend dem gewünschten Verlauf des Armaturenbrettes nachgeformt und an den zum Anschluss an die A-Säulen vorgesehenen Anschlussbereichen 13 leicht nach innen und/oder nach unten abgebogen. Dabei weist das von A- zu A-Säule verlaufende Hohlprofil 11 an seiner Unterseite abragende Stege 14 auf. Das Verstärkungsprofil 12 ist in seinem Querschnitt U-förmig gestaltet und übergreift mit seinen Seitenwangen 15, 16 die Stege 14 des als Hohlprofil 11 ausgebildeten Querträgers 10 und stößt mit den Oberkanten der Seitenwangen 15 und 16 jeweils an die Unterseite des Hohlprofiles 11, da die Stege 14 um die Wandstärke der Seitenwangen 15 und 16 gegenüber der jeweiligen Seitenwand 17 bzw. 18 des Hohlprofilstabes 11 nach innen zurückgesetzt sind. Zwecks fester Verbindung des Verstärkungsprofiles 12 mit dem Hohlprofil 11 des Querträgers 10 sind die Seitenwangen 15 und 16 des Verstärkungsprofiles 12 in ihrem oberen Bereich mit den Stegen 14 des Hohlprofiles 11 in durchlaufender Schweißnaht 19 miteinander verschweißt, die in Fig. 1 als auf der Innenseite des Querträgers 10 durchlaufende, strichpunktierte Linie dargestellt ist und in Fig. 2 auf der linken Seite als Schweißlinse zwischen Steg 14 und Seitenwange 15 eingezeichnet ist. Dabei mag zur Bildung der Schweißnähte 19 vorzugsweise das Laser-Schweißverfahren eingesetzt werden. Das Verstärkungsprofil 12 ist in der Fig. 1 rechts des Lenksäulenaufhaltebereichs an der Oberseite mit einem querschnittverringernden Schnitt versehen, so dass ein stufenloser Übergang von der Unterkante des Verstärkungsprofils 12 zur Unterkante des Querträgers 10 gewährleistet ist.

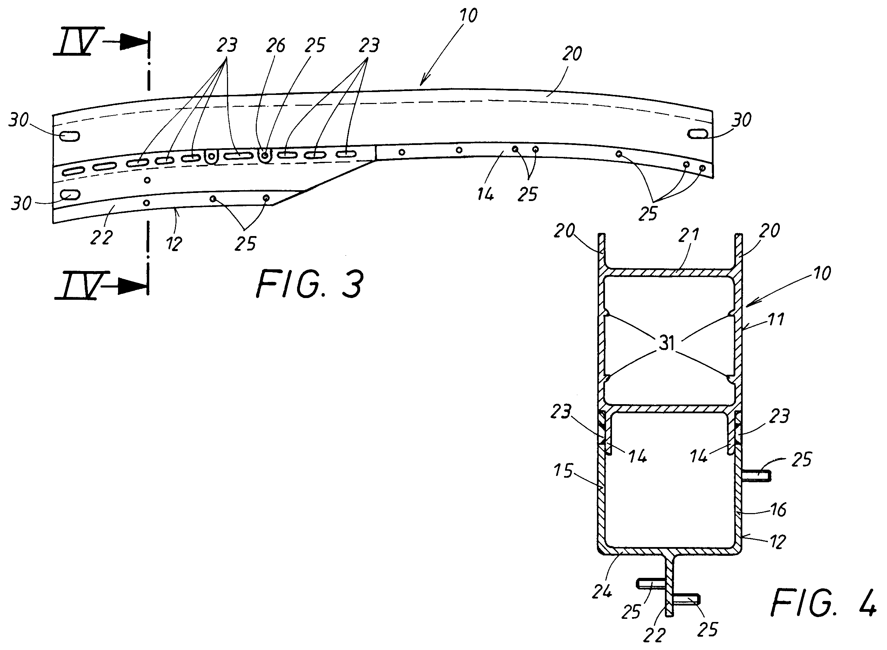

Der aus den Fig. 3 und 4 ersichtliche Querträger 10 ist hinsichtlich seines Hohlprofiles 11 gegenüber dem aus den Fig. 1 und 2 ersichtlichen Querträger insofern modifiziert, als dass der Hohlprofilstab 11 seine Seitenwände 17 und 18 verlängernde Stege 20 aufweist, welche die obere Querwand 21 des Hohlprofilstabes 11 überragen. In weiterer Unterscheidung zu der Ausführungsform gemäß den Fig. 1 und 2 ist bei dem aus den Fig. 3 und 4 ersichtlichen Ausführungsbeispiel bei dem im Querschnitt U-förmigen Verstärkungsprofil 12 an dessen Unterseite nur eine mittig nach unten abragende Lamelle 22 vorgesehen, während bei dem aus den Fig. 1 und 2 ersichtlichen Ausführungsbeispiel das Verstärkungsprofil 12 zwei unterseitig über seinen U-Querschnitt hinausragende Lamellen 22 aufweist, die Verlängerungen der Seitenwangen 15 und 16 des Verstärkungsprofiles bilden und dessen Querschnitt zu einem H-Profil ergänzen. Im Gegensatz zum in Fig. 1 dargestellten Verstärkungsprofil 12, wo der querschnittsverringernde Schnitt an der Oberseite des Verstärkungsprofiles erfolgt ist, weist das Verstärkungsprofil in Fig. 3 diesen Schnitt an der Unterseite auf. Dies kann von Vorteil sein, wenn das Innere des Verstärkungsprofils 12 zur Kabeldurchführung genutzt werden soll. In weiterer Unterscheidung des Ausführungsbeispieles gemäß den Fig. 3 und 4 gegenüber dem aus den Fig. 1 und 2 ersichtlichen Ausführungsbeispiel weisen die Seitenwangen 15 und 16 des Verstärkungsprofiles 12 eine Reihe von die Stege 14 des Querträgers 10 überdeckende Durchbrüche 23 in Form von Langlöchern auf, die eine Lochschweißung des Verstärkungsprofiles 12 mit dem Hohlprofil 11 erlauben. Für diese Lochschweißung bei Bauteilen, deren Werkstoffe aus Aluminium bestehen, lassen sich die oben genannten Schutzgas-Schweißverfahren einsetzen.

Um einerseits ein Lenksäulenlager und andererseits auch weitere, beliebige Anbauteile am Querträger festlegen zu können, sind sowohl am Hohlprofil 11 als auch am Verstärkungsprofil 12 in Fahrzeuglängsachse abragende Einpressschrauben 25 festgelegt. Bei dem den Querträger 10 bildenden Hohlprofil 11 können diese Einpressschrauben 25 an den Stegen 14 festgelegt sein, so dass im Bereich des Verstärkungsprofiles 12 an den entsprechenden Stellen im oberen Bereich der Seitenwangen 15 und 16 Aussparungen 26 angeordnet sind, welche den Durchtritt der Einpressschrauben 25 durch die Seitenwangen 15 und 16 bei dem Zusammenfügen von Hohlprofil 11 und Verstärkungsprofil 12 gestatten. Wie insbesondere der Fig. 2 zu entnehmen ist, können sowohl der Querträger 10 als auch das Verstärkungsprofil 12 mit Aufnahmebohrungen 27 beispielsweise zur Aufnahme von Einnietmuttern 28 und Kabelclips 29 versehen sein.

Zum Anschluss des Querträgers an die jeweilige A-Säule der Fahrzeugkarosserie können zwecks Toleranzausgleich am jeweils äußeren Stoßbereich des Querträgers 10 gegenüber der Horizontalen leicht geneigte Langlöcher 30 in den Seitenwänden 17 und 18 des Hohlprofiles 11 bzw. in den Seitenwangen 15 und 16 des Verstärkungsprofiles 12 angeordnet sein. Diese Langlöcher 30 dienen der Befestigung des Querträgers 10 und/oder des Verstärkungsprofils 12 an der A-Säule. An der A-Säule ist dazu ein in Richtung Querträger weisender Halter mit Durchbrüchen zur Verschraubung befestigt. Der nicht dargestellte Halter wird in das Innere des Querträgers 10 u./o. des Verstärkungsprofils 12 jeweils von der Seite eingeschoben. Die Durchbrüche des Halters fluchten mit den in Fig. 1 und 3 gezeigten Langlöchern 30. Die Befestigung erfolgt mittels Schrauben. Um ein Verquetschen der Profile beim Anziehen der Schrauben zu verhindern, kann jeweils eine Distanzhülse im Profilinneren vorgesehen werden. Zur besseren Fixierung, z.B. Verprägung, der Distanzhülsen können in den Profilen Nasen 31 vorgesehen sein.

Wie bereits erwähnt, geben die dargestellten und vorbeschriebenen Ausführungen den Erfindungsgegenstand nur beispielsweise wieder, der keinesfalls allein darauf beschränkt ist. Es sind vielmehr noch mancherlei Änderungen und Ergänzungen des Erfindungsgegenstandes möglich. Ferner sind alle aus der Beschreibung, den Ansprüchen und der Zeichnung ersichtlichen Merkmale erfindungswesentlich, auch wenn sie nicht ausdrücklich beansprucht worden sind.

### Bezugszeichenliste:

- 10: Querträger
- 11: Hohlprofil
- 12: Verstärkungsprofil
- 13: Anschlußbereich
- 14: Steg
- 15: Seitenwange, von 12
- 16: Seitenwange, von 12
- 17: Seitenwand, von 11
- 18: Seitenwand, von 11
- 19: Schweißnaht
- 20: Steg
- 21: Querwand
- 22: Lamelle
- 23: Durchbruch/Langloch
- 24: Verbindungssteg, von 12
- 25: Einpressschraube
- 26: Aussparung
- 27: Aufnahmebohrung
- 28: Einnietmutter
- 29: Kabelclip
- 30: Langloch
- 31: Nase

## Patentansprüche

1. Querträger zur Halterung der Lenksäule eines Kraftfahrzeuges, insbesondere eines Personenkraftwagens, der quer zur Fahrzeuglängsrichtung zwischen den beiden A-Säulen der Fahrzeugkarosserie angeordnet und an die A-Säulen angeschlossen ist, wobei der Querträger als Hohlprofil, vorzugsweise als stranggepresstes Hohlprofil aus dem Werkstoff Aluminium und seinen Legierungen gestaltet ist,
**dadurch gekennzeichnet,**
dass mit dem Querträger (10) im Bereich der Lenksäulenhalterung ein sich bereichsweise in Längsrichtung des Querträgers (10) erstreckendes Verstärkungsprofil (12) fest verbunden ist.

2. Querträger nach Anspruch 1, dadurch gekennzeichnet, dass das Verstärkungsprofil (12) einen U-förmigen Querschnitt aufweist, dessen Seitenwangen (15, 16) mit vom Querträger (10) nach unten abragenden Stegen (14) fest verbunden sind.

3. Querträger nach Anspruch 1 oder 2, dadurch gekennzeichnet, dass die an der Unterseite des Querträgers (10) abragenden Stege (14) um die Wandstärke der Seitenwangen (15, 16) des Verstärkungsprofiles (12) gegenüber der jeweiligen Seitenwand (17, 18) des Querträgers (10) nach innen versetzt angeordnet und von den Seitenwangen (15, 16) des Verstärkungsprofiles (12) übergriffen sind.

4. Querträger nach einem der vorhergehenden Ansprüche, dadurch gekennzeichnet, dass die feste Verbindung zwischen Querträger (10) und Verstärkungsprofil (12) durch Verschweißen, vorzugsweise durch Laserschweißen von Schweißnähten (19) zwischen den Stegen (14) des Querträgers (10) und den Seitenwangen (15, 16) des Verstärkungsprofiles (12) erfolgt.

5. Querträger nach einem der Ansprüche 1 bis 3, dadurch gekennzeichnet, dass im oberen Bereich der Seitenwangen (15, 16) des Verstärkungsprofiles (12) eine Reihe von die Stege (14) des Querträgers (10) überdeckenden Durchbrüchen (23) zur Lochschweißung angeordnet sind.

6. Querträger nach Anspruch 5, dadurch gekennzeichnet, dass die Durchbrüche (23) am oberen Rand der Seitenwangen (15, 16) des Verstärkungsprofiles (12) als sich in Längsrichtung des Querträgers (10) erstreckende, abstandsweise in einer Reihe hintereinander angeordnete Langlöcher ausgebildet sind.

7. Querträger nach einem der vorhergehenden Ansprüche, dadurch gekennzeichnet, dass das Verstärkungsprofil (12) unterseitig über seinen U-Querschnitt hinausragende Lamellen (22) aufweist, die Verlängerungen der Seitenwangen (15, 16) des Verstärkungsprofiles (12) bilden und dessen Querschnitt zu einem H-Profil ergänzen.

8. Querträger nach einem der Ansprüche 1 bis 6, dadurch gekennzeichnet, dass das einen U-Querschnitt aufweisende Verstärkungsprofil (12) unterseitig eine vom Verbindungssteg (24) der Seitenwangen (15, 16) abragende Lamelle (22) aufweist.

9. Querträger nach einem der vorhergehenden Ansprüche, dadurch gekennzeichnet, dass sowohl am Querträger (10) als auch am Verstärkungsprofil (12) in Fahrzeuglängsachse abragende Einpressschrauben (25) zur Befestigung eines Lenksäulenlagers und weiterer, beliebiger Anbauteile fixiert sind.

10. Querträger nach einem der vorhergehenden Ansprüche, dadurch gekennzeichnet, dass der Querträger (10) und gegebenenfalls auch das Verstärkungsprofil (12) Aufnahmebohrungen (27) zum Anbringen von Einnietmuttern (28), Kabelclips (29) u. dgl. aufweisen.
